# EUROPÄISCHE PATENTSCHRIFT

(11) **EP 2 854 242 B1**
(45) Veröffentlichungstag und Bekanntmachung des Hinweises auf die Patenterteilung: **30.10.2019**
(21) Anmeldenummer: 13185972.0
(22) Anmeldetag: 25.09.2013
(51) Int. Cl.: H01T 1/14, H02G 13/00

(54) **Anordnung zur Befestigung einer Freileitung an einem Mast**
Assembly for fastening an overhead line to a mast
Agencement pour la fixation d'une ligne aérienne à un mât

(43) Veröffentlichungstag der Anmeldung: 01.04.2015
(73) Patentinhaber: Siemens Aktiengesellschaft, 80333 München (DE)
(72) Erfinder: Bockarev, Alexander, 12623 Berlin Marzahn-Hellersdorf (DE); Robben, Bastian, 13507 Berlin (DE); Sulitze, Markus, 14612 Falkensee (DE); Udovcic, Danijel, 12347 Berlin (DE)

(56) Entgegenhaltungen:
- JP-A- 2003 217 790
- US-A1- 2012 087 055

## Beschreibung

Leitungsableiter sind in einem Stromübertragungsnetz, insbesondere in Hochspannungsnetzen mit Spannungen über 1 kV, parallel zu einem Leitungsisolator der Freileitung angeschlossen. Sie beinhalten ein Ableitelement aus nichtlinearen Metalloxidwiderständen in einem Porzellan oder Kunststoffgehäuse. Leitungsableiter werden vorzugsweise dort eingesetzt, wo es auf Grund fehlendem oder ungenügendem Erdseilschutz und/oder hoher Masterdungsstoßwiderstände (z.B. bei stark felsigem Untergrund) gehäuft zu rückwärtigen Überschlägen kommt. Zur nachträglichen Erhöhung der Versorgungszuverlässigkeit bereits bestehender Übertragungs- oder Verteilungsleitungen ist oft die Installation von Leitungsableitern an allen oder auch nur an einigen Masten eine kostengünstige Alternative zur Verbesserung des Erdseilschutzes oder der Masterdungsverhältnisse. Leitungsableiter werden sowohl in funkenstreckenloser Technik eingesetzt als auch in Verbindung mit einer externen Serienfunkenstrecke, die die Ableiter im Normalbetrieb, gegenüber Schaltüberspannungen oder auch nach einer Überlastung von der Leitung isolieren. Im nachfolgenden werden nur Leitungsableiter mit externer Serienfunkenstrecke betrachtet.

Ein Leitungsableiter mit externer Serienfunkenstrecke (englisch: externally gapped line arrester oder EGLA) weist eine in Serie zu dem Ableitelement geschaltete Funkenstrecke auf. Ein Ende des Leitungsableiters ist an einem Erdungspunkt des Freileitungsmastes geerdet, am anderen Ende befindet sich eine Funkenelektrode, die mit einem Funkenhorn am hochspannungsseitigen Ende des Leitungsisolators eine Funkenstrecke bildet. Statt dem Funkenhorn kann auch die Freileitung selber als hochspannungsseitiges Ende der Funkenstrecke dienen.

Tritt eine Überspannung beispielsweise durch einen Blitzeinschlag in die Freileitung auf, so wird die Funkenstrecke durch einen Lichtbogen kurzgeschlossen und die Überspannung kontrolliert durch den Leitungsableiter zur Erde hin abgeleitet. Nach dem Abklingen der Überspannung erlischt die Funkenstrecke und isoliert den Leitungsableiter von der Hochspannung. Leitungsableiter mit externer Serienfunkenstrecke sind in der IEC 60099-8 genormt. In der US 2012/0087055 A1 ist ein solcher Leitungsableiter mit externer Serienfunkenstrecke gezeigt.

Häufig werden Leitungsableiter mit externer Serienfunkenstrecke in bestehende Hochspannungsnetze nachgerüstet. Da ein Leitungsableiter mit Funkenelektrode mehrere Meter lang sein kann, besteht die Gefahr, dass beim Hantieren die Funkenelektrode zu nahe an die Freileitung kommt und dadurch ein Überschlag ausgelöst wird, wodurch das Montagepersonal der Gefahr eines Stromschlags ausgesetzt ist. Deswegen war es bislang nötig, den entsprechenden Netzabschnitt abzuschalten, um eine Gefährdung des Montagepersonals durch die Hochspannung zu vermeiden.

Eine gattungsgemäße Anordnung gemäss dem Oberbegriff des Anspruchs 1 ist aus der Druckschrift JP 2003 217790 A bekannt.

Aufgabe der vorliegenden Erfindung ist es, eine Anordnung zur Befestigung einer Freileitung an einem Mast anzugeben, mittels der ein Leitungsableiter mit externer Serienfunkenstrecke auch bei an der Freileitung anliegender Hochspannung montiert werden kann.

Die Lösung der Aufgabe erfolgt durch eine Anordnung mit den Merkmalen des Anspruchs 1 -.

Erfindungsgemäß weist eine Anordnung zur Befestigung einer Freileitung an einem Mast einen zwischen einem Erdungspunkt am Mast und einer Haltevorrichtung für die Freileitung angeordneten Isolator und einen am Erdungspunkt mittels einer Befestigungsvorrichtung befestigten Leitungsableiter auf. Der Leitungsableiter weist eine Funkenelektrode auf, die von der Freileitung oder einer mit der Freileitung verbundenen Hochspannungselektrode beabstandet ist. Der Abstand zwischen der Funkenelektrode und der Freileitung oder der Hochspannungselektrode definiert eine Funkenstrecke, in der bei geeignetem Abstand eine an der Freileitung anliegende Überspannung einen Lichtbogen zündet, der eine leitende Verbindung zwischen dem Erdungspunkt und der Freileitung über den Leitungsableiter herstellt, so dass die Überspannung zur Erde hin abfließen kann. Der Leitungsableiter und die Funkenstrecke sind in Reihe zueinander und parallel zum Isolator geschaltet. Der Leitungsableiter ist damit ein Leitungsableiter mit externer Serienfunkenstrecke. Der Leitungsableiter ist derart mittels der Befestigungsvorrichtung am Erdungspunkt angelenkt, dass der Leitungsableiter zwischen einer sicheren Montageposition und einer Arbeitsposition schwenkbar und in der Montageposition arretierbar ist. Dabei ist die Funkenstrecke in der Montageposition größer, als in der Arbeitsposition. Durch die Arretierung des Leitungsableiters in der Montageposition ist somit sichergestellt, dass die Funkenelektrode während der Montage einen größeren Abstand von einem Hochspannung führenden Teil der Anordnung hat, als in der Arbeitsposition, die der Leitungsableiter im normalen Betrieb der Anordnung einnimmt. Somit ist eine Montage des Leitungsableiters auch bei Hochspannung führender Freileitung möglich.

Ein Winkel α zwischen einer Isolatorlängsachse und einer Leitungsableiterlängsachse in der Montageposition mehr als 70° und in der Arbeitsposition weniger als 60°. Die durch den Leitungsableiter und den Isolator aufgespannte Ebene kann dabei in der durch den Isolator und die Freileitung aufgespannten Ebene liegen oder auch in einem Winkel β dazu ausgerichtet sein. In letzterem Fall bildet der Isolator die Schnittlinie der beiden Ebenen. Der Winkel β kann außerdem in der Montageposition anders sein, als in der Arbeitsposition. Vorzugsweise beträgt er in der Montageposition 90°. Der in der Montageposition größere Winkel α stellt sicher, dass die Funkenstrecke während der Montage ausreichend groß ist, so dass trotz anliegender Hochspannung an der Freileitung kein Lichtbogen zünden kann.

Die Befestigungsvorrichtung weist eine Befestigungsplatte zur Befestigung am Erdungspunkt und eine Montageplatte zur Befestigung des Leitungsableiters auf. Befestigungsplatte und Montageplatte sind über ein Drehgelenk miteinander verbunden.

Das Drehgelenk ist zwischen einer ersten Winkelposition und einer zweiten Winkelposition drehbar ist, wobei der Leitungsableiter in der ersten Winkelposition in der Montageposition und in der zweiten Winkelposition in der Arbeitsposition angeordnet.

Ein solches Drehgelenk erlaubt auf einfache Weise ein Drehen oder Schwenken des Leitungsableiters von der Montageposition in die Arbeitsposition.

Es wird auch bevorzugt, dass das Drehgelenk eine Drehwinkelbegrenzung aufweist, die nur Drehwinkel zwischen der ersten und der zweiten Winkelposition zulässt. Somit kann verhindert werden, dass versehentlich Winkel eingestellt werden, die kleiner sind, als in der Arbeitsposition, wodurch ein Lichtbogen gezündet werden könnte.

Für Verfahren zur Montage eines Leitungsableiters mit externer Serienfunkenstrecke an einem Erdungspunkt eines Freileitungsmastes wird davon ausgegangen, dass eine Freileitung an einem Isolator an einem Mast befestigt und in Betrieb genommen ist. Ein Leitungsableiter mit externer Serienfunkenstrecke soll nachgerüstet werden. Zunächst wird der Leitungsableiter an der Befestigungsvorrichtung befestigt. Dies kann bereits im Werk nach der Herstellung des Leitungsableiters erfolgen, oder auch erst am Ort der Montage beispielsweise auf einem Fahrzeug oder am Mastfuß. Dann wird die Befestigungsvorrichtung in einer sicheren Montageposition arretiert. Danach wird der Leitungsableiter mit der Befestigungsvorrichtung zum Erdungspunkt angehoben. Dies kann beispielsweise mittels Seilzügen, einem geerdeten Hubwagen oder per Hubschrauber erfolgen. Nun wird die Befestigungsvorrichtung am Erdungspunkt angebracht und dort befestigt. Währenddessen wird der Leitungsableiter durch die arretierte Befestigungsvorrichtung in der sicheren Montageposition gehalten, so dass keine Gefährdung des Montagepersonals erfolgt. Die Arretierung der Befestigungsvorrichtung in der Montageposition wird nun gelöst und der Leitungsableiter um eine Drehachse in die Arbeitsposition geschwenkt. Die Drehachse ist dabei bevorzugt horizontal ausgerichtet. Optional kann die Befestigungsvorrichtung nun noch in der Arbeitsposition des Leitungsableiters arretiert werden. Ein solches Verfahren erlaubt eine Montage eines Leitungsableiters bei an der Freileitung anliegender Hochspannung auf besonders einfache und sichere Weise.

Im Folgenden wird die Erfindung anhand der Zeichnungen näher erläutert. Dabei zeigen:
- Figur 1: eine erfindungsgemäße Anordnung in der Montageposition,
- Figur 2: eine Detailansicht der Figur 1,
- Figur 3: eine erfindungsgemäße Anordnung in der Arbeitsposition,
- Figur 4: eine Detailansicht der Figur 3,
- Figur 5: eine Befestigungsvorrichtung in der Montageposition,
- Figur 6: eine Befestigungsvorrichtung in der Arbeitsposition.

Einander entsprechende Teile sind in allen Figuren mit den gleichen Bezugszeichen versehen.

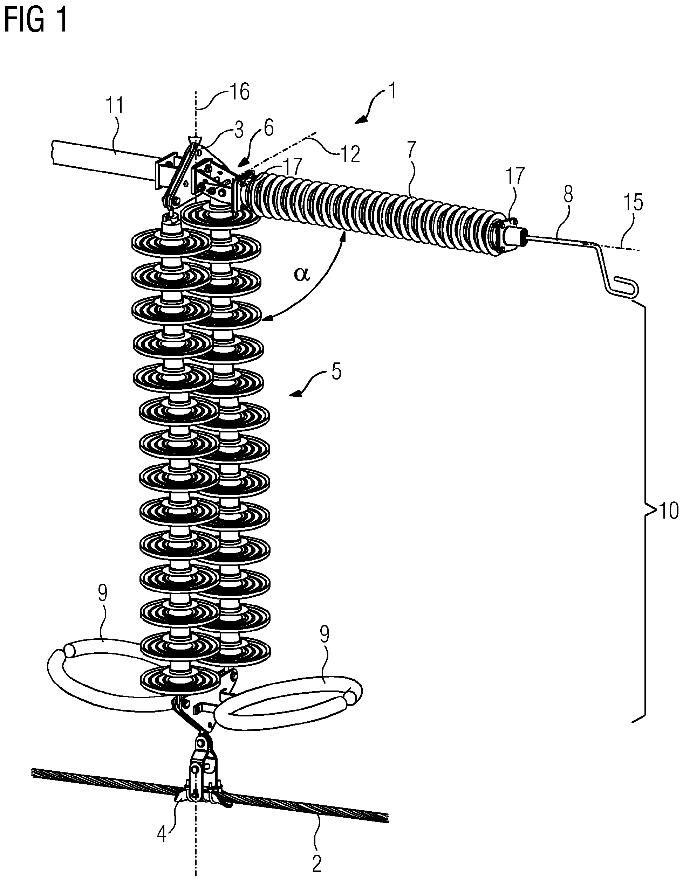

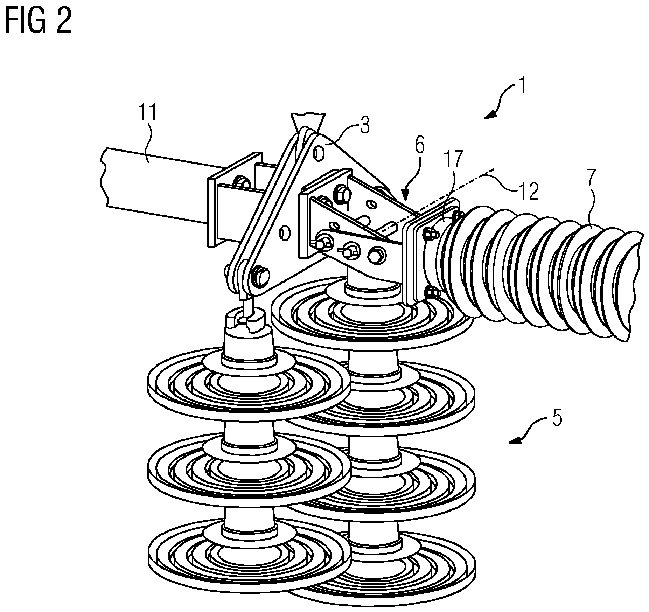

Die Figuren 1 und 2 zeigen eine erfindungsgemäße Anordnung 1 in der Montageposition. An einem hier nicht dargestellten Mast für eine Freileitung 2 ist ein Ausleger 11 mit einem Erdungspunkt 3 befestigt. An dem Ausleger 11 hängt ein Isolator 5 hier aus zwei parallelen Isolatorketten. Am gegenüberliegenden Ende des Isolators 5 ist eine Haltevorrichtung 4 angeordnet, in der eine Freileitung 2 gehalten wird. Ebenfalls am unteren Ende des Isolators 5 sind zwei mit der Freileitung 2 elektrisch verbundene Hochspannungselektroden 9 angeordnet. Am Erdungspunkt 3 ist eine Befestigungsvorrichtung 6 befestigt, an der wiederum ein Leitungsableiter 7 befestigt ist. Der Leitungsableiter 7 ist hier aus in der durch den Isolator 5 und die Freileitung 2 aufgespannten Ebene ausgerichtet. Möglich ist aber auch eine Ausrichtung senkrecht zu dieser Ebene.

Der Leitungsableiter 7 weist ein zylindrisches isoliertes Gehäuse auf, in dessen Inneren sich Ableitelemente befinden. An den Enden des Gehäuses ist jeweils eine Endarmatur 17 angeordnet. Eine der Endarmaturen 17 ist mit Montageschrauben 32 an der Befestigungsvorrichtung 6 befestigt, am anderen Ende ist eine Funkenelektrode 8 angeordnet. Die Funkenelektrode 8 bildet mit der Freileitung 2, oder wie hier mit der Hochspannungselektrode 9 eine Funkenstrecke 10 aus. In diesem Fall ist der Leitungsableiter 7 in der Montageposition. Die Funkenstrecke 10, also der kleinste Abstand zwischen der Funkenelektrode 8 und einem Hochspannung führenden Teil der Anordnung 1, in diesem Fall der Hochspannungselektrode 9, ist hier so groß, dass die im normalen Betrieb der Freileitung 2 auftretenden Spannungen nicht ausreichen, um über die Funkenstrecke 10 einen Lichtbogen auszubilden. Somit ist diese Montageposition sicher, so dass eine Montage des Leitungsableiters 7 bei unter Hochspannung stehender Freileitung 2 erfolgen kann, ohne dass das Montagepersonal Gefahr läuft, in Kontakt mit Hochspannung führenden Teilen zu kommen. Der Leitungsableiter 7 ist zur Montage am Ausleger 11 an der Befestigungsvorrichtung 6 mittels der Schrauben 32 befestigt und im Winkel α von hier 90° zwischen der Leitungsableiterlängsachse 15 und der Isolatorlängsachse 16 durch den Arretierungsbolzen 25 arretiert. Während der Montage der Befestigungsvorrichtung 6 am Erdungspunkt 3 des Auslegers 11 verbleibt der Leitungsableiter 7 in dieser Position.

In der Montageposition darf ein bestimmter Winkel α nicht unterschritten werden. Dieser hängt im Wesentlichen vom Längenverhältnis von Leitungsableiter 7 und Isolator 5 und der an der Freileitung 2 anliegenden Hochspannung ab. Praktisch erweisen sich Winkel α zwischen 70° und 120° als vorteilhaft. Bei Winkeln α größer als 90° ist allerdings zu beachten, dass mit möglicherweise oberhalb der Freileitung 2 angeordneten weiteren Freileitungen eine Funkenstrecke ausgebildet wird, die zum Überschlag führen kann. Deswegen erweist sich ein Winkel α von etwa 90° als besonders vorteilhaft.

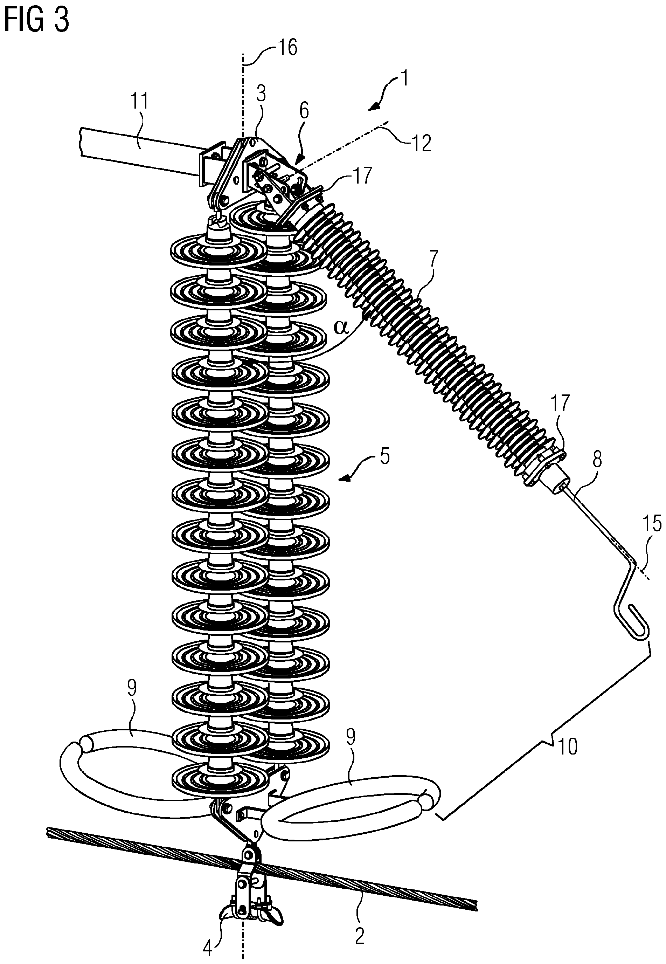

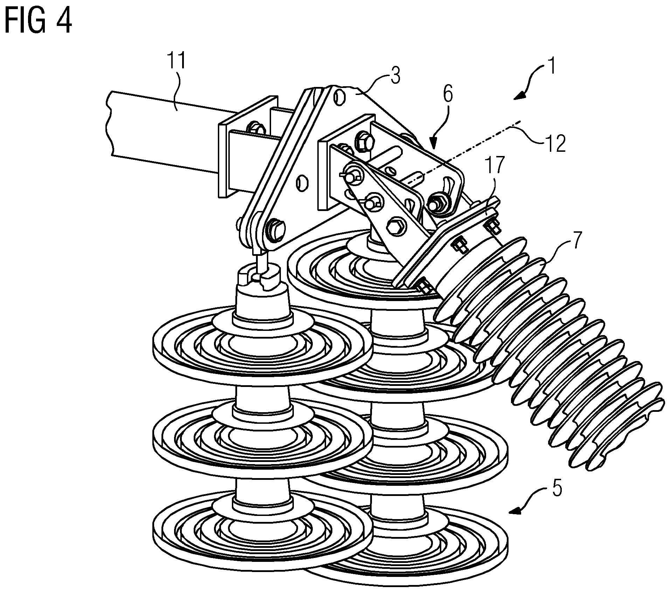

Die Figuren 3 und 4 zeigen eine erfindungsgemäße Anordnung 1 in der Arbeitsposition. Der Leitungsableiter 7 ist hierbei gegenüber der Montageposition um eine horizontale Drehachse 12 nach unten Richtung Freileitung 2 geschwenkt. Der Winkel α beträgt hier etwa 50°. Die Funkenstrecke 10 ist nun so bemessen, dass bei auftretenden Überspannungen in der Freileitung 2 ein Funkenüberschlag zwischen der Hochspannungselektrode 9 und der Funkenelektrode 8 auftritt, wodurch die dazwischenliegende Luft ionisiert und somit leitend wird. Die Überspannung wird nun über den Leitungsableiter 7 zum Erdungspunkt 3 abgeleitet. Nach dem Abklingen der Überspannung erlischt der Lichtbogen und der Leitungsableiter 7 ist wieder von der Freileitung 2 isoliert.

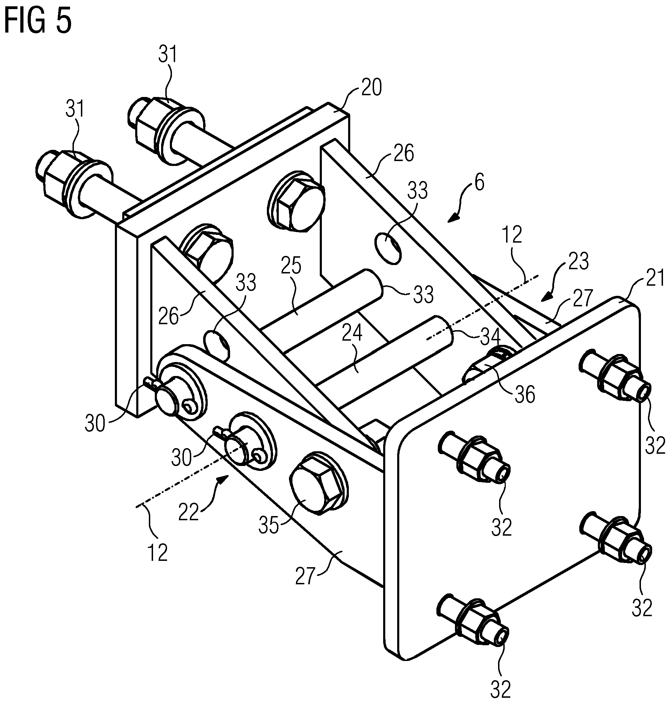

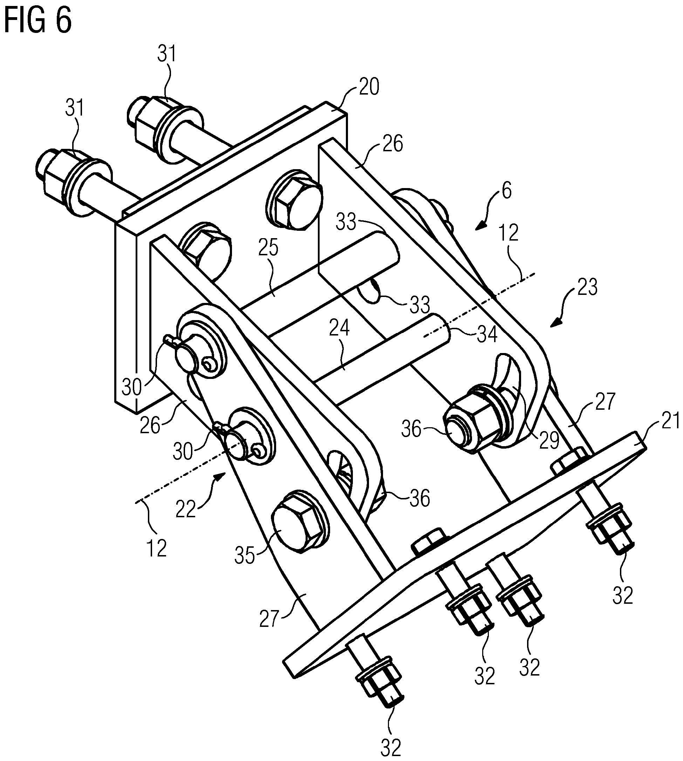

Die Figur 5 zeigt ein Ausführungsbeispiel einer Befestigungsvorrichtung 6 in der Montageposition, die Figur 6 in der Arbeitsposition. Die Befestigungsvorrichtung 6 weist eine Befestigungsplatte 20 zur Befestigung am Erdungspunkt 3 mittels der Schrauben 31 auf. Außerdem weist sie eine Montageplatte 21 zur Befestigung des Leitungsableiters mittels der Schrauben 32 auf. Befestigungsplatte 20 und Montageplatte 21 sind über ein Drehgelenk 22 miteinander verbunden, so dass sie um eine parallel zu beiden verlaufende, horizontale Drehachse 12 gegeneinander verdreht werden können. Das Drehgelenk 22 weist dabei zwei parallel verlaufende und mit der Befestigungsplatte 20 verbundene erste Schenkel 26, und zwei ebenso parallel verlaufende und mit der Montageplatte 21 verbundene zweite Schenkel 27 auf. Die Schenkel 26, 27 stehen dabei senkrecht von der Befestigungsplatte 20 beziehungsweise der Montageplatte 21 ab. Die Schenkel 26, 27 weisen in ihrer Mitte jeweils ein Achsloch 34 auf, wobei die Schenkel 26, 27 so angeordnet sind, dass ihre Achslöcher entlang der Drehachse 12 liegen. Durch die Achslöcher 34 ist ein Achsbolzen 24 durch alle vier Schenkel 26, 27 gesteckt, der die Drehachse 12 bildet. Dieser ist noch mit Sicherungsstiften 30 gesichert.

In einem Abstand von der Drehachse 12 weisen die Schenkel 27 jeweils ein in den Figuren nicht sichtbares Arretierungsloch 33 auf, durch das ein Arretierungsbolzen 25 steckbar ist. Die Schenkel 26 weisen jeweils zwei solcher Arretierungslöcher 33 mit demselben Abstand von der Drehachse 12 auf.

Der Arretierungsbolzen 25 kann so durch die Arretierungslöcher 33 in den Schenkeln 27 und durch jeweils ein Arretierungsloch 33 in jedem der Schenkel 26 geführt werden, so dass das Drehgelenk 22 in zwei Positionen arretierbar ist. Der Arretierungsbolzen 25 wird dann mittels des Sicherungsstifts 30 gesichert. Die in der Figur 5 gezeigte Position entspricht dabei der Montageposition, die in der Figur 6 der Arbeitsposition.

Zusätzlich kann das Drehgelenk eine Drehwinkelbegrenzung 23 aufweisen. In der dargestellten Ausführungsform wird diese durch zwei in den Schenkeln 26 eingebrachte kreissegmentförmige Langlöcher 29 und zwei an den Schenkeln 27 angebrachte und durch die Langlöcher 29 gesteckte Fixierungsschrauben 35 erzielt.

Zur Montage des Leitungsableiters 7 wird dieser zunächst mit einer Endarmatur 17 mittels der Schrauben 32 an der Montageplatte 21 der Befestigungsvorrichtung 6 angebracht. Dies kann bereits im Herstellungswerk des Leitungsableiters 7 oder am Ort der Montage beispielsweise am Fuß des Mastes, an dem der Leitungsableiter 7 montiert werden soll, erfolgen. Die Befestigungsvorrichtung 6 wird nun in die Montageposition gebracht und dort mittels des Arretierungsbolzens 25 gesichert. Die Schrauben 35 werden angezogen, so dass die Schenkel 26 und 27 paarweise gegeneinander gepresst werden. Wenn später der Leitungsableiter 7 am Mast befestigt wird, wird so das durch das Gewicht des Leitungsableiters 7 wirkende Drehmoment aufgenommen, so dass der Arretierungsbolzen 25 leicht wieder entfernt werden kann. Außerdem ist die Position des Leitungsableiters 7 dadurch doppelt arretiert. Der an der Befestigungsvorrichtung 6 angebrachte Leitungsableiter 7 wird nun zum Erdungspunkt 3 angehoben. Dies kann mittels einer geerdeten Hubvorrichtung, einem Flaschenzug oder auch einem Hubschrauber erfolgen. Vorzugsweise erfolgt bereits das Anheben so, dass die Leitungsableiterlängsachse 15 horizontal ausgerichtet ist. Die Befestigungsplatte 20 wird nun am Erdungspunkt 3 mittels der Schrauben 31 durch einen Monteur befestigt. Währenddessen kann das freie Ende des Leitungsableiters 7 mit der Funkenelektrode 8 durch einen weiteren Monteur oder durch Seile gehalten werden. Ist der Leitungsableiter 7 am Erdungspunkt 3 befestigt, kann der Achsbolzen 24 herausgezogen werden. Durch das Gewicht des Leitungsableiters 7 wird dieser nach unten zur Freileitung 2 in die Arbeitsposition geschwenkt. Gegebenenfalls müssen dazu die Schrauben 35 zuvor gelockert werden. Das Schwenken in die Arbeitsposition erfolgt ohne weiteren Eingriff eines Monteurs, so dass diese nicht gefährdet werden. Die Drehwinkelbegrenzung 23 gewährleistet, dass der Leitungsableiter 7 nicht weiter nach unten schwenkt, als bis zur Arbeitsposition. Der Arretierungsbolzen 25 kann nun wieder in die Arretierungslöcher 33 eingesteckt werden, so dass der Leitungsableiter 7 nun in der Arbeitsposition arretiert ist.

## Patentansprüche

1. Anordnung (1) zur Befestigung einer Freileitung (2) an einem Mast, mit
- einem zwischen einem Erdungspunkt (3) am Mast und einer Haltevorrichtung (4) für die Freileitung (2) angeordneten Isolator (5),
- einem am Erdungspunkt (3) mittels einer Befestigungsvorrichtung (6) befestigten Leitungsableiter (7) mit einer Funkenelektrode (8), die von der Freileitung (2) oder einer mit dieser verbundenen Hochspannungselektrode (9) beabstandet ist und der Abstand eine Funkenstrecke (10) definiert, wobei
- der Leitungsableiter (7) und die Funkenstrecke (10) in Reihe zueinander und parallel zum Isolator (5) geschaltet sind, wobei der Leitungsableiter (7) derart mittels der Befestigungsvorrichtung (6) am Erdungspunkt (3) angelenkt ist, dass der Leitungsableiter (7) zwischen einer sicheren Montageposition und einer Arbeitsposition schwenkbar und in der Montageposition arretierbar ist, wobei
- die Funkenstrecke (10) in der Montageposition größer ist, als in der Arbeitsposition und wobei
- die Befestigungsvorrichtung (6) eine Befestigungsplatte (20) zur Befestigung am Erdungspunkt (3) und eine Montageplatte (21) zur Befestigung des Leitungsableiters (7) aufweist, die über ein Drehgelenk (22) miteinander verbunden sind, und wobei
das Drehgelenk (22) zwischen einer ersten Winkelposition und einer zweiten Winkelposition drehbar ist, wobei der Leitungsableiter (7) in der ersten Winkelposition in der Montageposition und in der zweiten Winkelposition in der Arbeitsposition angeordnet ist,
**dadurch gekennzeichnet,**
**dass** das Drehgelenk (22) zwei parallel verlaufende und mit der Befestigungsplatte (20) verbundene erste Schenkel (26), und zwei ebenso parallel verlaufende und mit der Montageplatte (21) verbundene zweite Schenkel (27) aufweist, wobei
die Schenkel (26, 27) jeweils ein Achsloch (34) aufweisen und so angeordnet sind, dass ihre Achslöcher (34) entlang einer Drehachse (12) des Drehgelenkes (22) liegen und wobei durch die Achslöcher (34) ein Achsbolzen (24) durch alle vier Schenkel (26, 27) gesteckt ist, der die Drehachse (12) bildet, und wobei
ein Winkel (α) zwischen einer Isolatorlängsachse (16) und einer Leitungsableiterlängsachse (15) in der Montageposition mehr als 70° und in der Arbeitsposition weniger als 60° beträgt.

2. Anordnung (1) nach Anspruch1 1,
**dadurch gekennzeichnet,**
**dass** das Drehgelenk (22) eine Drehwinkelbegrenzung (23) aufweist, die nur Drehwinkel zwischen der ersten und der zweiten Winkelposition zulässt.

## Claims

1. Arrangement (1) for fastening an overhead line (2) to a mast, with
- an insulator (5) which is arranged between a grounding point (3) on the mast and a holding device (4) for the overhead line (2), and
- a line arrester (7) with a spark electrode (8) which is secured to the grounding point (3) by means of a fastening apparatus (6), which is arranged at a distance from the overhead line (2) or from a high-voltage electrode (9) which is bonded thereto, and the distance defines a spark gap (10), wherein
- the line arrester (7) and the spark gap (10) are connected in series with each other and in parallel with the insulator (5), wherein the line arrester (7) is hinged on the grounding point (3) by means of the fastening apparatus (6), such that the line arrester (7) can be pivoted between a secure mounting position and a working position, and can be locked in the mounting position, wherein
- the spark gap (10) is larger in the mounting position than in the working position and wherein
- the fastening apparatus (6) is provided with a fastening plate (20) for attachment to the grounding point (3), and with a mounting plate (21) for the attachment of the line arrester (7), which are interconnected by means of a hinge (22), and wherein
the hinge (22) is arranged to pivot between a first angular position and a second angular position wherein, in the first angular position, the line arrester (7) assumes the mounting position and, in the second angular position, assumes the working position,
**characterized in that** the hinge (22) is provided with two parallel-mounted first flanges (26), bonded to the fastening plate (20), and two likewise parallel-mounted second flanges (27), bonded to the mounting plate (21), wherein the flanges (26, 27) are each provided with an axle hole (34) and are arranged such their axle holes (34) lie along an axis of rotation (12) of the hinge (22), and wherein, through the axle holes (34), an axle bolt (24) passes through all four flanges (26, 27), said axle bolt forming the axis of rotation (12), and wherein
an angle (α) between a longitudinal axis (16) of the insulator and a longitudinal axis (15) of the line arrester in the mounting position is greater than 70° and, in the working position, is less than 60°.

2. Arrangement (1) according to Claim 1,
**characterized in that**
the hinge (22) is provided with a rotation-limiting mechanism (23), which only permits an angle of rotation between the first and second angular positions.

## Revendications

1. Agencement (1) de fixation d'une ligne (2) aérienne à un mât, comprenant
- un isolateur (5), disposé entre un point (3) de mise à la terre sur le mât et un dispositif (4) de retenue de la ligne (2) aérienne,
- un parafoudre (7) de ligne, fixé au point (3) de mise à la terre au moyen d'un système (6) de fixation et ayant une électrode (8) d'éclatement, qui est à distance de la ligne (2) aérienne ou d'une électrode (9) de haute tension reliée à celle-ci et qui définit la section (10) d'éclatement, dans lequel
- le parafoudre (7) de ligne et la section (10) d'éclatement sont montés en série entre eux et en parallèle avec l'isolateur (5), le parafoudre (7) de ligne étant articulé au point (3) de mise à la terre au moyen du système (6) de fixation, de manière à ce que le parafoudre (7) de ligne puisse pivoter entre une position de montage sécurisée et une position de travail et puisse être bloqué dans la position de montage, dans lequel
- la section (10) d'éclatement est plus grande dans la position de montage que dans la position de travail et, dans lequel
- le système (6) de fixation a une plaque (20) de fixation pour la fixation au point (3) de mise à la terre et une plaque (21) de montage pour la fixation du parafoudre (7) de ligne, qui sont assemblées l'une à l'autre par une articulation (22) pivotante et, dans lequel
l'articulation (22) pivotante peut tourner entre une première position angulaire et une deuxième position angulaire, le parafoudre (7) de ligne étant, dans la première position angulaire, dans la position de montage et dans la deuxième position angulaire, dans la position de travail,
**caractérisé**
**en ce que** l'articulation (22) pivotante a deux premières branches (26), s'étendant en parallèle et reliées à la plaque (20) de fixation, et deux deuxièmes branches (27), s'étendant également en parallèle et reliées à la plaque (21) de montage, les branches (26, 27) ayant chacune un trou (34) d'axe et étant disposées de manière à ce que leur trou (34) d'axe s'étende suivant un axe (12) de rotation de l'articulation (22) pivotante et dans lequel un axe (24) est enfilé dans toutes les quatre branches (26, 27), en formant l'axe (12) de rotation, et dans lequel un angle (α) entre un axe (16) longitudinal de l'isolateur et un axe (15) longitudinal du parafoudre de ligne est, dans la position de montage, supérieur à 70° et, dans la position de travail, inférieur à 60°.

2. Agencement (1) suivant la revendication 1,
**caractérisé**
**en ce que** l'articulation (22) pivotante a une limitation (23) d'angle de rotation, qui n'autorise qu'un angle de rotation compris entre la première et la deuxième position angulaire.
